# EUROPÄISCHE PATENTSCHRIFT

(11) **EP 3 314 102 B1**
(45) Veröffentlichungstag und Bekanntmachung des Hinweises auf die Patenterteilung: **12.06.2019**
(21) Anmeldenummer: 16719378.8
(22) Anmeldetag: 27.04.2016
(51) Int. Cl.: F01N 3/20, F02M 57/02, F02M 63/00

(54) **EINSPRITZVORRICHTUNG**
INJECTING DEVICE
DISPOSITIF D'INJECTION

(30) Priorität: 24.06.2015 DE 102015211727
(43) Veröffentlichungstag der Anmeldung: 02.05.2018
(73) Patentinhaber: Robert Bosch GmbH, 70442 Stuttgart (DE)
(72) Erfinder: HAEBERER, Rainer, 75015 Bretten (DE); STOEBERL, Thorsten, 71642 Ludwigsburg-Hoheneck (DE); WELTING, Dirk, 71287 Weissach (DE); DORDANAS, Dimitrios, 71638 Ludwigsburg (DE)
(86) Internationale Anmeldenummer: PCT/EP2016/059356
(87) Internationale Veröffentlichungsnummer: WO 2016/206836

(56) Entgegenhaltungen:
- EP-A1- 2 694 859
- WO-A1-2014/066696
- DE-A1-102012 206 481
- DE-A1-102012 221 479
- GB-A- 2 360 819

## Beschreibung

Die Erfindung betrifft eine Einspritzvorrichtung, insbesondere eine Einspritz- und Dosiervorrichtung, die zum Einspritzen eines Reduktionsmittels in den Abgasstrang eines Verbrennungsmotors vorgesehen ist.

Bei Kraftwagen mit Verbrennungsmotoren, insbesondere Dieselmotoren, muss aufgrund der Abgasgesetzgebung unter anderem der Schadstoff NOₓ reduziert werden. Eine Methode, die dabei zur Anwendung kommt, ist das Verfahren der sogenannten selektiven katalytischen Reduktion ("SCR-Verfahren"), bei dem NOₓ unter zu Hilfenahme eines Reduktionskatalysators und eines flüssigen Reduktionsmittels, insbesondere einer wässrigen Harnstofflösung ("AdBlue" ®), zu N₂ und H₂O reduziert wird.

Dabei wird das Reduktionsmittel aus einem Tank entnommen und von einer Einspritzvorrichtung, die auf dem Pumpe/Düse-Prinzip beruht, stromaufwärts des Reduktionskatalysators in die Abgasströmung des Verbrennungsmotors eingedüst.

Um die NOₓ-Umsatzrate zu optimieren, ist es vorteilhaft, das Reduktionsmittel mit einem sehr feinen Spray und mit einem kräftigen Impuls in die Abgasströmung einzudüsen. Es ist deshalb vorteilhaft, wenn das Reduktionsmittel vor dem Einspritzen auf einen erhöhten Druck von beispielsweise 10 bar komprimiert wird.

Einspritzvorrichtungen sind aus den Druckschriften DE 10 2012 206481 A1 und EP 2 694 859 A1 bekannt. Die Druckschrift DE 10 2012 206481 A1 zeigt eine Einspritzvorrichtung mit einem integralen Gehäuseelement, das sich entlang einer Achse erstreckt, wobei in dem Gehäuseelement eine sich entlang der Achse erstreckende axiale Bohrung ausgebildet ist, und wobei in einem ersten Bereich der axialen Bohrung ein entlang der Achse verschiebbarer Kolben angeordnet ist, und in einem zweiten Bereich der axialen Bohrung ein Austrittsventil angeordnet ist. Die Druckschrift EP 2 694 859 A1 zeigt eine Einspritzvorrichtung mit einem Gehäuseelement, das sich entlang einer Achse erstreckt, wobei in dem Gehäuseelement eine sich entlang der Achse erstreckende axiale Bohrung ausgebildet ist, und mit einer äußeren Hülse, welche das Gehäuseelement entlang seines Umfangs umschließt, so dass zwischen der äußeren Hülse und dem Gehäuseelement ein ringförmiger Kühlmittelraum zur Aufnahme eines Kühlmittels ausgebildet ist.

Die Einspritzvorrichtung ist prinzipbedingt unmittelbar am Abgasrohr positioniert, welches im Betrieb sehr heiß wird. Wässrige Harnstofflösung wirkt insbesondere bei hohen Temperaturen sehr korrosiv und hat eine geringe Viskosität, was in engen Führungen zu einem raschen Verschleiß und Ausfall der Einspritzvorrichtung führen kann.

Es ist daher vorteilhaft, eine verbesserte Einspritzvorrichtung zur Verfügung zu stellen, die in der Lage ist, den von der erhitzten wässrigen Harnstofflösung verursachten oder unterstützten Verschleiß zu reduzieren. Darüber hinaus ist es vorteilhaft, eine Einspritzvorrichtung zur Verfügung zu stellen, die mit geringen Toleranzen gefertigt werden kann, so dass die gewünschte Einspritzmenge exakt einstellbar ist.

Eine Einspritzvorrichtung gemäß einem Ausführungsbeispiel der Erfindung umfasst ein integrales Gehäuseelement, das insbesondere im Wesentlichen rotationssymmetrisch um eine Achse ausgebildet ist und sich entlang dieser Achse erstreckt. In dem Gehäuseelement ist eine sich entlang der Achse erstreckende zentrale axiale Bohrung ausgebildet. In einem ersten Bereich der axialen Bohrung ist ein entlang der Achse verschiebbarer Kolben angeordnet, und in einem zweiten Bereich der axialen Bohrung ist ein Austrittsventil mit einer Einspritzdüse vorgesehen. Die Einspritzdüse ist ausgebildet, das Reduktionsmittel, das im Betrieb durch den Kolben auf einen Einspritzdruck komprimiert wird, in den Abgasstrang eines Verbrennungsmotors einzuspritzen.

Eine äußere Hülse umschließt das Gehäuseelement entlang seines Umfangs, so dass zwischen der äußeren Hülse und dem Gehäuseelement ein ringförmiger Kühlmittelraum zur Aufnahme eines Kühlmittels ausgebildet ist. Zwischen der äußeren Hülse und wenigstens dem Bereich des Gehäuseelements, in dem der erste Bereich der axialen Bohrung ausgebildet ist, ist eine innere Hülse so angeordnet, dass zwischen der inneren Hülse und dem Gehäuseelement ein Spulenraum ausgebildet ist. In dem Spulenraum ist eine elektrische Spule angeordnet, so dass der Kolben durch Bestromen der Spule entlang der axialen Bohrung bewegbar ist.

Durch die vorgeschlagene integrale Bauweise des Gehäuses ist das Reduktionsmittel vollständig vom Kühlkreislauf getrennt. Es existieren keine Schweißstellen oder Elastomerabdichtungen zwischen dem Kühlmittel und dem Reduktionsmittel. Auch das Einspritzventil mit der Einspritzdüse ist innerhalb des integralen Gehäuses angeordnet und vollständig vom Kühlmittel getrennt.

In einer Ausführungsform ist wenigstens eine von der inneren Hülse und der äußeren Hülse fluiddicht, beispielsweise durch Verschweißen, mit dem Gehäuseelement verbunden, um einen fluiddicht abgedichteten Kühlmittelraum zu schaffen.

In einer Ausführungsform ist in einem dritten Bereich der axialen Bohrung, der zwischen dem ersten Bereich und dem zweiten Bereich der axialen Bohrung ausgebildet ist, ein Entlüftungsventil angeordnet. Ein derartiges Entlüftungsventil ermöglicht es, Gas, insbesondere Luft, das sich zu Betriebsbeginn in einem in der axialen Bohrung ausgebildeten Pumpenraum befindet, vollständig aus dem Pumpenraum abzupumpen, um einen störungsfreien Betrieb der Einspritzvorrichtung mit einer exakt definierten Einspritzmenge zu ermöglichen.

In einer Ausführungsform ist an dem von dem Austrittsventil abgewandten Ende des Kolbens ein Magnetanker ausgebildet. Der Magnetanker wird durch ein Magnetfeld angezogen, das durch Bestromen der Spule erzeugt wird, so dass der Kolben durch Ein- und Ausschalten des Stromflusses durch die Spule bewegbar ist. Durch einen mit dem Kolben mechanisch verbundenen Magnetanker kann der Kolben besonders effektiv durch die von der Spule erzeugte Magnetkraft bewegt werden.

In einer Ausführungsform ist der Magnetanker durch ein Federelement elastisch an dem Gehäuseelement abgestützt. Insbesondere ist an dem von dem Austrittsventil abgewandten Ende des Gehäuseelements ein Anschlag für den Magnetanker ausgebildet, um eine definierte Ausgangsposition für den Magnetanker zu schaffen.

In einer Ausführungsform ist der Anschlag wenigstens teilweise mit einer geringeren Wandstärke als andere Bereiche des Gehäuseelements ausgebildet, um den magnetischen Fluss durch den Magentanker zu erhöhen. Die Wandstärke des Anschlags kann insbesondere dadurch reduziert werden, dass auf der von dem Magnetanker abgewandten Seite des Bodens eine Nut ausgebildet ist.

In einer Ausführungsform ist die Nut, z.B. durch Auftragsschweißen, mit einem austenitischen Werkstoff gefüllt. In einer alternativen Ausführungsform ist die Nut auch durch eine austenitische Platte, die auf der vom Reduktionsmittel abgewandten Seite an das Gehäuseelement geschweißt ist, verschlossen. Durch diese Maßnahmen kann das Gehäuseelement mechanisch stabilisiert werden, um die reduzierte Wandstärke auszugleichen.

In einer Ausführungsform ist das von dem Austrittsventil abgewandte Ende des Gehäuseelements durch einen Deckel verschlossen, um das einzupritzende Fluid in der Einspritzvorrichtung einzuschließen und von der Umgebung zu isolieren. In dem Deckel kann insbesondere wenigstens eine Öffnung ausgebildet sein, durch die das einzuspritzende Fluid der Einspritzvorrichtung zugeführt werden kann.

In einer Ausführungsform ist in dem Gehäuseelement wenigstens eine radiale Bohrung vorgesehen, die in Fluidverbindung mit der axialen Bohrung steht und es ermöglicht, das einzuspritzende Fluid in den Pumpenraum, der in der axialen Bohrung ausgebildet ist, einzubringen.

In einer Ausführungsform ist das Austrittsventil in die axiale Bohrung eingepasst, um eine fluiddichte Verbindung zwischen dem Austrittsventil und dem Gehäuseelement zu schaffen, ohne dass dazu eine Schweißnaht ausgebildet werden muss.

### Kurze Beschreibung der Figuren:

Ein Ausführungsbeispiel der Erfindung wird im Folgenden anhand der beigefügten Figuren näher erläutert. Dabei zeigt:
Figur 1 eine schematische Darstellung eines Systems zum Einspritzen eines flüssigen Reduktionsmittels in einen Abgasstrang eines Verbrennungsmotors;
Figur 2 eine Schnittansicht durch eine Einspritzvorrichtung gemäß einem Ausführungsbeispiel der Erfindung;
Figur 3 einen vergrößerten Ausschnitt des Pumpmechanismus der in Figur 2 gezeigten Einspritzvorrichtung; und
Figur 4 einen Schnitt durch einen zentralen Bereich eines Deckels, wie er in der in den Figuren 2 und 3 gezeigten Einspritzvorrichtung verwendet wird.

### Figurenbeschreibung:

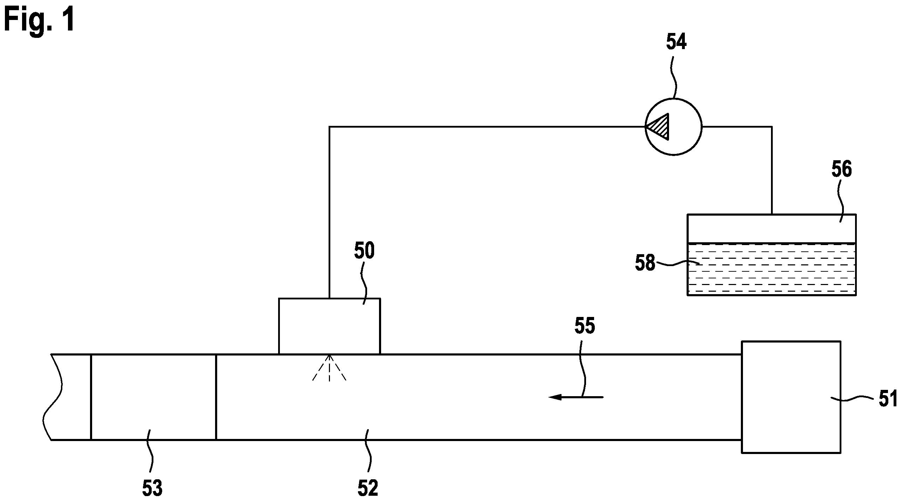

Figur 1 zeigt in einer schematischen Darstellung ein System zum Einspritzen eines flüssigen Reduktionsmittels in einen Abgasstrang 52 eines Verbrennungsmotors 51.

Eine Einspritzvorrichtung 50, die insbesondere auf dem Pumpe/Düse-Prinzip beruht, ist zwischen dem Verbrennungsmotor 51 und einem stromabwärts des Verbrennungsmotors 51 angeordneten SCR-Katalysator 53 am Abgasstrang 52 angebracht. Durch eine Vorförderpumpe 54 wird ein einzuspritzendes fluides Reduktionsmittel 58 aus einem Vorratstank 56 entnommen und der Einspritzvorrichtung 50, mit einem leicht erhöhten Druck von beispielsweise 2 bis 3 bar, zugeführt. Die Einspritzvorrichtung 50 erhöht den Druck des Reduktionsmittels 58 weiter, beispielsweise auf 10 bar, und spritzt das Reduktionsmittel 58 mit dem erhöhten Druck in den Abgasstrang 52 ein. Im Abgasstrang 52 vermischt sich das eingespritzte Reduktionsmittel 58 mit den durch den Abgasstrang 52 strömenden Abgasen 55 und reagiert in einem stromabwärts der Einspritzvorrichtung 50 angeordneten SCR-Katalysator 53 mit den in den Abgasen 55 enthaltenen Stickoxiden (NOₓ), wobei diese zu N₂ und H₂O reduziert werden. Das Vermischen des Reduktionsmittels 58 mit den Abgasen 55 kann durch ein oder mehrere im Abgasstrang 52 angeordnete Mischelemente, die in der Fig. 1 nicht gezeigt sind, unterstützt werden.

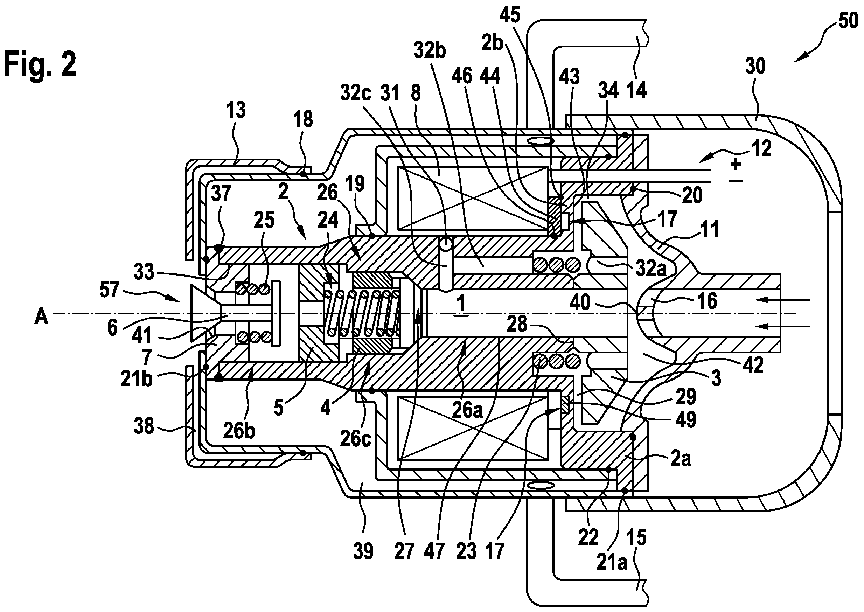

Figur 2 zeigt eine Schnittansicht durch ein Ausführungsbeispiel einer erfindungsgemäßen Einspritzvorrichtung 50.

In einem zentralen Bereich der Einspritzvorrichtung 50 befindet sich ein integrales Gehäuseelement 2, das im Wesentlichen zylindrisch um eine in der Figur 2 horizontal verlaufende Achse A ausgebildet ist. Das integrale Gehäuseelement 2 ist insbesondere aus einem magnetischen Werkstoff, der beispielsweise einen gehärteten, nicht rostenden, insbesondere martensitischen Edelstahl umfasst, ausgebildet. Ein aus einem derartigen Material ausgebildetes Gehäuseelement 2 hat die erforderliche Verschleißfestigkeit und kann einen Magnetfluß führen.

Das Gehäuseelement 2 weist eine entlang der Achse A verlaufende zentrale axiale Bohrung 26 auf. In einem ersten, in der Figur 2 rechts dargestellten, Bereich 26a der axialen Bohrung 26 ist ein Kolben 1 derart angeordnet, dass er entlang einer sehr engen Führung 47, die durch die axiale Bohrung 26 geschaffen wird, parallel zur Achse A beweglich ist. So ist das Volumen eines Pumpenraumes 27, der in der Darstellung der Figur 2 auf der linken Seite an den Kolben 1 angrenzt, durch Bewegen des Kolbens 1 variierbar.

Der Kolben 1 besteht aus einem Material, das beispielsweise einen austenitischen Edelstahl umfasst, und weist insbesondere durch eine entsprechende Oberflächenbehandlung, wie z.B. Nitrocarburieren, Nitrieren, Kolsterisieren, und/oder eine anschließende Kohlenstoffbeschichtung eine sehr gute Verschleißfestigkeit auf.

Auf der dem Pumpenraum 27 gegenüberliegenden, in der Figur 2 rechts dargestellten Seite des Kolbens 1 befindet sich ein Magnetanker 3, der fest mit dem Kolben 1 verbunden oder integral mit dem Kolben 1 ausgebildet ist. Der Magnetanker 3 hat in einer Ebene, die sich in einem rechten Winkel zur Achse A erstreckt, einen größeren Durchmesser als der Kolben 2. Der Magnetanker 3 ist durch ein Federelement 23 elastisch auf dem Gehäuseelement 2 abgestützt.

Im Bereich des Magnetankers 3 weist das Gehäuseelement 2 einen topfförmigen Bereich 2a auf, der einen größeren Durchmesser als das Gehäuseelement 2 im Bereich des Kolbens 1 hat. Der topfförmige Bereich 2a umgibt den Magnetanker 3 entlang seines Umfangs derart, dass in radialer Richtung zwischen dem äußeren Umfang des Magnetankers 3 und dem inneren Umfang des topfförmigen Bereichs 2a ein parasitärer Luftspalt 34 ausgebildet und der Magnetanker 3 parallel zur Achse A frei beweglich ist.

Der topfförmige Bereich 2a umfasst einen sich in radialer Richtung nach außen erstreckenden Boden 2b, dessen innerer Bereich einen dem Magnetanker 3 gegenüberliegenden ersten Anschlag 28 ausbildet. Wenigstens ein Bereich des Bodens 2b des topfförmigen Bereichs 2a ist mit einer reduzierten Wandstärke ausgebildet, um den magnetischen Fluss zwischen dem ersten Anschlag 28 und dem Magentanker 3 zu erhöhen. Um die Wandstärke des Bodens 2b zu reduzieren, ist in dem Boden 2b des topfförmigen Bereichs 2a eine kreisförmig, um die axiale Bohrung 26 umlaufende Nut 17 ausgebildet.

Aufgrund der reduzierten Wandstärke wird der magnetische Fluss durch den Boden 2b gedrosselt und muss den Weg durch den Arbeitsluftspalt 29 nehmen, der zwischen dem ersten Anschlag 28 und dem Magnetanker 3 ausgebildet ist. An der mit 43 bezeichneten Stelle, die dem in radialer Richtung äußeren Rand des Magnetankers 3 gegenüber liegt, wechselt der Magnetfluss wieder von dem Magnetanker 3 in den Boden 2b des topfförmigen Bereichs 2a des Gehäuses 2.

Die erforderliche mechanische Stabilität des Gehäuses 2 ist trotz der reduzierten Wandstärke zu gewährleisten. Dabei soll ein Kontakt zwischen dem aggressiven Reduktionsmittel und korrosionsanfälligen Schweißstellen möglichst vermieden werden. In einer ersten Variante wird die Nut 17 durch Auftragsschweißen mit einem austenitischen Werkstoff aufgefüllt, wie im unteren Bereich der Figur 2 gezeigt. Alternativ kann die Nut 17 durch eine austenitische Platte 44, die auf der vom Reduktionsmittel abgewandten Seite an den Stellen 45 und 46 an das Gehäuseelement 2 geschweißt wird, verschlossen und dadurch mechanisch stabilisiert werden, wie es im oberen Bereich der Figur 2 gezeigt ist.

Das Gehäuseelement 2 ist jenseits des Magentankers 3 durch einen mit dem topfförmigen Bereich 2a des Gehäuses 2 an der Stelle 20 verschweißten Deckel 11 verschlossen. Über dem Deckel 11 ist eine äußere Abdeckhaube 30 angebracht.

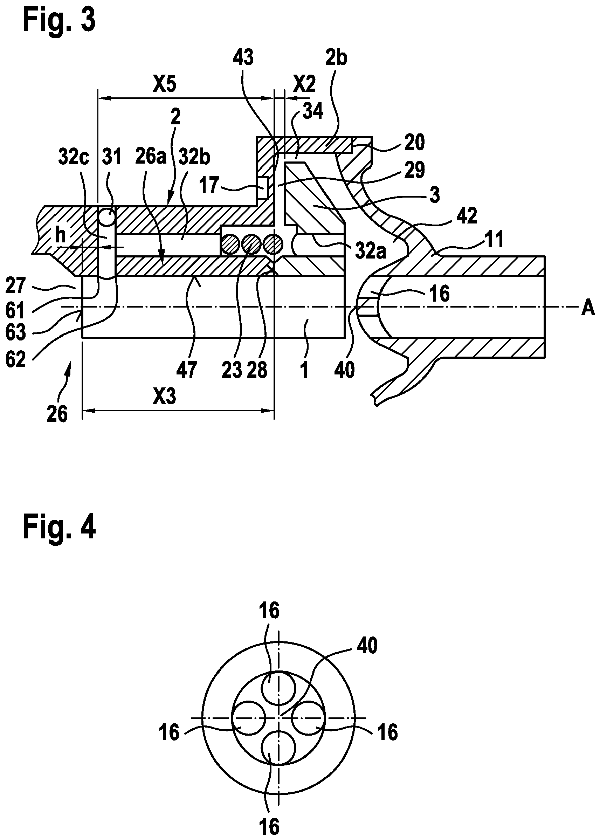

In dem Deckel 11 ist wenigstens eine Öffnung 16 ausgebildet, die es ermöglicht, das einzuspritzende Fluid in das Innere des Gehäuseelements 2 zu führen. Im Zentrum des Deckels 11 ist ein zweiter Anschlag 40 ausgebildet, der den Weg des Magentankers 3 bei seiner Bewegung entlang der Achse A begrenzt. Um den zweiten Anschlag 40 im Zentrum des Deckels 11 ausbilden zu können, ist die wenigstens eine Öffnung 16 außerhalb des Zentrums des Deckels 11 ausgebildet. Um eine ausreichend große Durchflussmenge zu ermöglichen, können um den zweiten Anschlag 4 mehrere Öffnungen 16 ausgebildet sein, wie in der Figur 4, die einen Querschnitt durch den zentralen Bereich des Deckels 11 darstellt, schematisch gezeigt.

Der Deckel 11 ist insbesondere wenigstens teilweise elastisch ausgebildet, um das Anschlagen des Magentankers 3 an den zweiten Anschlag 40 zu dämpfen. Durch eine solche Dämpfung können sowohl die Betriebsgeräusche als auch der Verschleiß der Einspritzvorrichtung 50 reduziert werden. Der Deckel 11 kann darüber hinaus auch wenigstens teilweise plastisch verformbar ausgebildet sein. Bei einem plastisch ausgebildeten Deckel 11 ist die Position des zweiten Anschlags 40 entlang der Achse A durch plastisches Verformen des Deckels 11 variierbar, um einen gewünschten maximalen Ankerhub einzustellen.

Die Schweißstelle 20 zwischen dem Deckel 11 und dem Gehäuseelement 2 ist auf der kalten Seite in unmittelbarer Nähe der Kühlung ausgebildet. Dadurch wird die Gefahr von Korrosion reduziert. Auch ein Durchrosten an dieser Stelle wäre weniger kritisch, da die aufgrund des Durchrostens auftretende Leckage nicht in den Kühlkreislauf gelangen würde.

In dem Magnetanker 3 und dem Gehäuseelement 2 sind axiale und radiale Bohrungen 32a, 32b, 32c ausgebildet, die eine Fluidzufuhr in den Pumpenraum 27 bilden und es ermöglichen, das einzuspritzende Fluid aus dem Raum 42, der von dem Deckel 11, dem topfförmigen Bereich 2a und dem Magnetanker 3 begrenzt wird, in den Pumpenraum 27 zu führen. Aus fertigungstechnischen Gründen ist die radiale Bohrung 32c von der axialen Bohrung 26 bis zum äußeren Umfang des Gehäuses 2 ausgebildet und dort durch eine in die radiale Bohrung 32c eingepasste Kugel 31 fludidicht verschlossen.

Ein mit einer Düse ausgebildetes Austrittsventil 57 schließt die axiale Bohrung 26 in einem zweiten Bereich 26b auf der in der Figur 2 links dargestellten Seite des Gehäuseelements 2 ab. Bei dem Austrittsventil 57 handelt es sich um ein nach außen öffnendes Ventil 57 mit einem Ventilkolben 6 und einem Ventil- und Düsenkörper 7, der einen Ventilsitz 41 umfasst. Der Ventil- und Düsenkörper 7 des Austrittsventils 57 ist in das Gehäuseelement 2 eingepresst. Ein solcher Presssitz 33 verhindert, dass das korrosiv wirkende Reduktionsmittel an die Schweißstelle 37 gelangt, die den Ventil- und Düsenkörper 7 fest mit dem Gehäuseelement 2 verbindet.

Auf der von dem Kolben 1 abgewandten (in der Fig. 2 links dargestellten) Seite des Pumpenraumes 27 ist in einem dritten Bereich 26c der axialen Bohrung 26, der sich zwischen dem ersten Bereich 26a und dem zweiten Bereich 26b befindet, ein Entlüftungsventil 4 vorgesehen. Das Entlüftungsventil 4 ermöglicht es, Gas, insbesondere Luft, das sich zu Betriebsbeginn im Pumpenraum 27 befindet, aus dem Pumpenraum 27 abzupumpen. Ohne ein derartiges Entlüftungsventil 4 wäre das Volumen zwischen der pumpenraumseitigen Stirnseite des Kolbens 1 und dem stromabwärts angeordneten Austrittsventil 7 so groß, dass Gas, das sich in diesem Volumen befindet, durch Bewegen des Kolbens 1 nur komprimiert, nicht aber vollständig durch das Austrittsventil 7 aus dem Pumpenraum 27 hinaus befördert werden könnte.

Eine im Pumpenraum 27 verbleibende Gasmenge würde zu Schwankungen der in jedem Pumpenhub geförderten Reduktionsmittelmenge führen und verhindern, dass konstant eine wohldefinierte Reduktionsmittelmenge in den Abgasstrang 52 eingespritzt werden kann.

Der Öffnungsdruck des Entlüftungsventils 4 ist über die Vorspannung einer Entlüftungsventilfeder 24 einstellbar, beispielsweise indem ein Federabstützelement 5, auf dem sich die Entlüftungsventilfeder 24 abstützt, in seinem Presssitz im zweiten Bereich 26b der Bohrung 26 parallel zur Achse A verschoben wird.

Im ersten Bereich 26a der Bohrung 26 ist das Gehäuseelement 2 entlang seines Umfangs von einer elektrischen Spule 8 umgeben, die über elektrische Leitungen 12 mit elektrischem Strom versorgbar ist. Durch Bestromen der elektrischen Spule 8 wird ein Magnetfeld erzeugt, das den Magnetanker 3 gegen die elastische Kraft des Federelements 23 in Richtung des ersten Anschlags 28 zieht. Bei dieser Bewegung wird auch der mit dem Magnetanker 3 verbundene oder integral ausgebildete Kolben 1 in der gleichen Richtung entlang der Achse A bewegt, so dass er das Volumen des Pumpenraumes 27 reduziert. Durch die Reduktion des Volumens des Pumpenraumes 27 wird der Druck im Pumpenraum 27 erhöht, bis der Öffnungsdruck des Entlüftungsventils 4 erreicht ist, so dass sich das Entlüftungsventil 4 öffnet und der Inhalt des Pumpenraums 27 zum Auslassventil 57 strömt. Nach einer weiteren Erhöhung des Drucks, die durch eine weitere Bewegung des Magentankers 3 und des Kolbens 1 bewirkt wird, öffnet auch das Auslassventil 57 gegen die Kraft der Auslassventilfeder 25 und das Fluid wird mit hohen Druck in den Abgasstrang 52 eingespritzt.

Nach dem Abschalten des Stromes durch die elektrische Spule 8 werden der Magentanker 3 und der mit dem Magentanker 3 verbundene Kolben 1 durch das Federelement 23 in Richtung des am Deckel 11 ausgebildeten zweiten Anschlags 40 zurück in die Ausgangsposition gedrückt.

Um die elektrische Spule 8 ist eine innere Hülse 9 ausgebildet. Die innere Hülse 9 ist an den Stellen 19 und 22 mit dem Gehäuseelement 2 verschweißt und bildet auf diese Weise einen fluiddicht abgeschlossenen Raum, der sich um den Umfang des Gehäuses 2 erstreckt und in dem die elektrische Spule 8 angeordnet ist.

Um den äußeren Umfang des Gehäuses 2 und der inneren Hülse 9 ist eine zweite, äußere Hülse 10 derart angeordnet, dass zwischen der äußeren Hülse 10 und der inneren Hülse 9 bzw. zwischen der äußeren Hülse 10 und dem Gehäuseelement 2 ein radialer Kühlmittelraum 39 ausgebildet ist. Die äußere Hülse 10 ist an den Stellen 21a und 21b mit einer äußeren Stirnseite des Ventil- und Düsenkörpers 7 bzw. mit dem äußeren Umfang des topfförmigen Bereichs 2a des Gehäuses 2 verschweißt, so dass der Kühlmittelraum 39 fluiddicht abgedichtet ist.

Der Kühlmittelraum 39 ist mit wenigstens einem Kühlmittelzufluss 14 und mit wenigstens einem Kühlmittelabfluss 15 ausgebildet, die es ermöglichen, ein Kühlmittel, insbesondere Kühlwasser, durch den Kühlmittelraum 39 zu führen, um die von dem im Betrieb heißen Abgasstrang 52 übertragene Wärme abzuführen und die Einspritzvorrichtung 50 zu kühlen.

Auf der dem heißen Abgasstrang 52 zugewandten, in der Figur 2 links dargestellten, Seite ist die äußere Hülse 10 von einer zusätzlichen Wärmeschutzhülse 13 umgeben, die auf der im Betrieb dem Abgasstrang 52 zugewandten (in der Figur 2 links dargestellten) Seite der Einspritzvorrichtung 50 einen Wärmeisolationsraum 38 schafft, um die von dem im Betrieb heißen Abgasstrang 52 abgestrahlte Wärme abzuschirmen. Die Wärmeschutzhülse 13 ist an der Stelle 18 ringförmig mit der äußeren Hülse 10 verschweißt.

Figur 3 zeigt eine vergrößerte Teilschnittansicht des zentralen Bereichs der Einspritzvorrichtung 50 mit dem in der axialen Bohrung 26 beweglichen Kolben 6, dem Pumpenraum 27 und dem Magnetanker 3.

Sobald der Kolben 1 mit seiner dem Pumpenraum 27 zugewandten Kante 63 die Bohrung 32c an der Kante 61 frei gibt, wenn er sich aufgrund der Einwirkung des Federelements 23 nach rechts bewegt, beginnt Reduktionsmittel 58, dass durch die Bohrungen 32a, 32b, 32c zugeführt wird, in den Pumpenraum 27 zu strömen.

Die Förderung des Fluids (Förderhub) beginnt, sobald der Kolben 1, der sich aufgrund der durch Bestromen der Spule 8 erzeugten Magnetkraft nach links bewegt, mit seiner dem Pumpenraum 27 zugewandten Kante 63 die Kante 61 der Bohrung 32c passiert.

Die Hubhöhe h des Förderhubs ist durch den Abstand der Kante 63 von der Kante 61 in der (linken) Endposition des Kolbens 1 vorgegeben: h = X3 - X5.

Um die Fördermenge eines Pumpenhubes exakt einstellen zu können, müssen die Abstände X3 und X5 sehr genau gefertigt sein.

Die Ankerplatte 3 kann reproduzierbar mit sehr geringer Toleranz auf den Kolben 1 aufgebracht, insbesondere aufgeschrumpft werden. Somit kann die Größe X3 mit einer sehr geringe Toleranz gefertigt werden.

Das Maß X5 kann ebenso sehr genau gefertigt werden. Eine Möglichkeit besteht darin, zunächst die Querbohrung 32c zu setzen und anschließend den Boden 2b des topfförmigen Bereiches 2a auf das entsprechende axiale Maß X5 abzuschleifen. Das erforderliche Schleifmaß kann ermittelt werden, indem der Pumpenraum 27 unter (Luft-)Druck gesetzt und die radiale Bohrung 32c anschließend mit einem sogenannten Masterkolben verschlossen wird. Über den Druckabfall an der radialen Bohrung 32c kann dann der Abstand X5 zwischen der Fläche 43 der Kante 61 bestimmt werden. Dem Ergebnis entsprechend wird die Fläche 43, z.B. durch Schleifen, auf das gewünschte Maß nachgearbeitet.

Da das Gehäuseelement 2 ein integrales Bauteil ist, ist die gewünschte rechtwinklige Ausrichtung der Fläche 43 zur Führung 47 optimal realisierbar. Dies und die integrale Bauweise des Gehäuses 2 haben zur Folge, dass auch der radiale parasitäre Luftspalt 43 sehr genau herstellbar ist. Für geringe Toleranzen ist es vorteilhaft, dass der erste Anschlag 28 des Magnetankers 3 an das Gehäuseelement 2 nur eine sehr kleine Fläche des Bodens 2b einnimmt. Da diese Fläche sehr klein ist, reicht die Kraft des Federelements 23 aus, um den Kolben 1 gegen die sich im ersten Anschlag 28 aufbauende Restremanenz nach rechts zu drücken. Auf eine zusätzliche unmagnetische Scheibe zwischen dem Gehäuseelement 2 und Magentanker 3 kann daher verzichtet werden. Durch den Verzicht auf eine derartige Scheibe können die axialen geometrischen Toleranzen weiter minimiert werden.

Die Breite X2 des Arbeitsluftspaltes 43 bei geschlossenem Magnetkreis ergibt sich unmittelbar aus der Fertigung. Da die komplette Ankerseite in einer Aufspannung bearbeitet werden kann, sind die geometrischen Toleranzen (Maß-, Form- und Lagetoleranz) des Luftspaltes 43 minimal.

Das beschriebene Ausführungsbeispiel der Erfindung stellt somit eine Einspritzvorrichtung 50 zur Verfügung, bei der das Reduktionsmittel durch ein integrales Gehäuseelement 2 zuverlässig von den Schweißstellen und dem Kühlmittel getrennt ist. Darüber hinaus ermöglicht das integral ausgebildete Gehäuseelement 2, die Dosier- und Einspritzvorrichtung 50 mit geringen Toleranzen herzustellen und somit die gewünschte Einspritzmenge genau einzustellen.

## Patentansprüche

1. Einspritzvorrichtung (50) mit einem integralen Gehäuseelement (2), das sich entlang einer Achse (A) erstreckt, wobei in dem Gehäuseelement (2) eine sich entlang der Achse (A) erstreckende axiale Bohrung (26) ausgebildet ist, und wobei in einem ersten Bereich (26a) der axialen Bohrung (26) ein entlang der Achse verschiebbarer Kolben (1) angeordnet ist, und in einem zweiten Bereich (26b) der axialen Bohrung (26) ein Austrittsventil (57) angeordnet ist, mit einer äußeren Hülse (10), welche das Gehäuseelement (2) entlang seines Umfangs umschließt, so dass zwischen der äußeren Hülse (10) und dem Gehäuseelement (2) ein ringförmiger Kühlmittelraum (39) zur Aufnahme eines Kühlmittels ausgebildet ist; einer inneren Hülse (9), die zwischen der äußeren Hülse (10) und wenigstens dem Bereich des Gehäuseelements (2), in dem der erste Bereich (26a) der axialen Bohrung (26) ausgebildet ist, angeordnet ist, so dass zwischen der inneren Hülse (9) und dem Gehäuseelement (2) ein Spulenraum ausgebildet ist, in dem eine elektrische Spule (8) angeordnet ist.

2. Einspritzvorrichtung (50) nach Anspruch 1, wobei an dem von dem Austrittsventil (57) abgewandten Ende des Kolbens (1) ein Magnetanker (3) ausgebildet ist, so dass der Kolben (1) durch Bestromen der Spule (8) bewegbar ist.

3. Einspritzvorrichtung (50) nach Anspruch 2, wobei der Magnetanker (3) durch ein Federelement (23) elastisch an dem Gehäuseelement (2) abgestützt ist, und wobei an dem von dem Austrittsventil (57) abgewandten Ende des Gehäuseelements (2) ein Boden (2b) mit einem Anschlag (28) für den Magnetanker (3) ausgebildet ist.

4. Einspritzvorrichtung (50) nach Anspruch 3, wobei der Boden (2b) wenigstens teilweise mit einer geringeren Wandstärke als die anderen Bereiche des Gehäuseelements (2) ausgebildet ist, wobei insbesondere auf der von dem Magnetanker (3) abgewandten Seite des Bodens (2b) eine Nut (17) ausgebildet ist.

5. Einspritzvorrichtung (50) nach Anspruch 4, wobei die Nut (17) mit einem austenitischen Werkstoff aufgefüllt oder durch eine austenitische Platte (44) verschlossen ist.

6. Einspritzvorrichtung (50) nach einem der vorangehenden Ansprüche, wobei in einem dritten Bereich (26c) der axialen Bohrung (26), der zwischen dem ersten Bereich (26a) und dem zweiten Bereich (26b) der axialen Bohrung (26) ausgebildet ist, ein Entlüftungsventil (4) angeordnet ist.

7. Einspritzvorrichtung (50) nach einem der vorangehenden Ansprüche, wobei das von dem Austrittsventil (57) abgewandte Ende des Gehäuseelements (2) durch einen Deckel (11) verschlossen ist, wobei in dem Deckel (11) insbesondere wenigstens eine Öffnung (16) zur Zufuhr eines zu dosierenden Fluids ausgebildet ist.

8. Einspritzvorrichtung (50) nach einem der vorangehenden Ansprüche, wobei wenigstens eine von der inneren Hülse (9) und der äußeren Hülse (10) fluiddicht mit dem Gehäuseelement (2) verbunden, insbesondere verschweißt ist.

9. Einspritzvorrichtung (50) nach einem der vorangehenden Ansprüche, wobei das Austrittsventil (57) in die axiale Bohrung (26) eingepasst ist.

## Claims

1. Injection device (50) having an integral housing element (2) which extends along an axis (A), wherein an axial bore (26) which extends along the axis (A) is formed in the housing element (2), and wherein a piston (1) which is displaceable along the axis is arranged in a first region (26a) of the axial bore (26), and an outlet valve (57) is arranged in a second region (26b) of the axial bore (26), having an outer sleeve (10) which surrounds the housing element (2) along its circumference, such that a ring-shaped coolant chamber (39) for accommodating a coolant is formed between the outer sleeve (10) and the housing element (2); an inner sleeve (9) which is arranged between the outer sleeve (10) and at least that region of the housing element (2) in which the first region (26a) of the axial bore (26) is formed, such that, between the inner sleeve (9) and the housing element (2), there is formed a coil chamber, in which an electrical coil (8) is arranged.

2. Injection device (50) according to Claim 1, wherein a magnet armature (3) is formed at that end of the piston (1) which is averted from the outlet valve (57), such that the piston (1) can be moved by electrical energization of the coil (8).

3. Injection device (50) according to Claim 2, wherein the magnet armature (3) is supported elastically on the housing element (2) by means of a spring element (23), and wherein, at that end of the housing element (2) which is averted from the outlet valve (57), there is formed a base (2b) with a stop (28) for the magnet armature (3).

4. Injection device (50) according to Claim 3, wherein the base (2b) is formed at least partially with a smaller wall thickness than the other regions of the housing element (2), wherein a groove (17) is formed in particular on that side of the base (2b) which is averted from the magnet armature (3).

5. Injection device (50) according to Claim 4, wherein the groove (17) is filled with an austenitic material or is closed off by an austenitic plate (44) .

6. Injection device (50) according to any of the preceding claims, wherein a ventilation valve (4) is arranged in a third region (26c) of the axial bore (26) which is formed between the first region (26a) and the second region (26b) of the axial bore (26) .

7. Injection device (50) according to any of the preceding claims, wherein that end of the housing element (2) which is averted from the outlet valve (57) is closed off by means of a cover (11), wherein, in the cover (11), there is formed in particular at least one opening (16) for the feed of a fluid for metering.

8. Injection device (50) according to any of the preceding claims, wherein at least one out of the inner sleeve (9) and the outer sleeve (10) is connected, in particular welded, in fluid-tight fashion to the housing element (2).

9. Injection device (50) according to any of the preceding claims, wherein the outlet valve (57) is fitted into the axial bore (26).

## Revendications

1. Dispositif d'injection (50) comprenant un élément de boîtier (2) d'un seul tenant qui s'étend le long d'un axe (A), dans lequel un alésage axial (26) s'étendant le long de l'axe (A) est formé dans l'élément de boîtier (2), et dans lequel un piston (1) mobile le long de l'axe est disposé dans une première région (26a) de l'alésage axial (26), et une soupape de sortie (57) est disposée dans une deuxième région (26b) de l'alésage axial (26), comprenant une douille extérieure (10), laquelle entoure l'élément de boîtier (2) le long de sa périphérie de telle sorte qu'un espace d'agent de refroidissement annulaire (39) destiné à recevoir un agent de refroidissement soit formé entre la douille extérieure (10) et l'élément de boîtier (2) ; une douille intérieure (9) qui est disposée entre la douille extérieure (10) et au moins la région de l'élément de boîtier (2) dans laquelle la première région (26a) de l'alésage axial (26) est formée, de telle sorte qu'un espace de bobine soit formé entre la douille intérieure (9) et l'élément de boîtier (2), espace de bobine dans lequel est disposée une bobine électrique (8).

2. Dispositif d'injection (50) selon la revendication 1, dans lequel une armature magnétique (3) est formée à l'extrémité du piston (1) opposée à la soupape de sortie (57), de telle sorte que le piston (1) soit déplaçable par alimentation de la bobine (8) en courant électrique.

3. Dispositif d'injection (50) selon la revendication 2, dans lequel l'armature magnétique (3) est supportée de manière élastique sur l'élément de boîtier (2) par un élément ressort (23), et dans lequel un fond (2b) doté d'une butée (28) pour l'armature magnétique (3) est formé à l'extrémité de l'élément de boîtier (2) opposée à la soupape de sortie (57).

4. Dispositif d'injection (50) selon la revendication 3, dans lequel le fond (2b) est formé de manière à présenter au moins partiellement une épaisseur de paroi plus petite que les autres régions de l'élément de boîtier (2), dans lequel une rainure (17) est formée en particulier sur le côté du fond (2b) opposé à l'armature magnétique (3).

5. Dispositif d'injection (50) selon la revendication 4, dans lequel la rainure (17) est remplie d'une matière austénitique ou est fermée par une plaque austénitique (44) .

6. Dispositif d'injection (50) selon l'une des revendications précédentes, dans lequel une soupape de dégazage (4) est disposée dans une troisième région (26c) de l'alésage axial (26) qui est formée entre la première région (26a) et la deuxième région (26b) de l'alésage axial (26).

7. Dispositif d'injection (50) selon l'une des revendications précédentes, dans lequel l'extrémité de l'élément de boîtier (2) opposée à la soupape de sortie (57) est fermée par un couvercle (11), dans lequel en particulier au moins une ouverture (16) pour l'amenée d'un fluide à doser est formée dans le couvercle (11).

8. Dispositif d'injection (50) selon l'une des revendications précédentes, dans lequel au moins l'une parmi la buse intérieure (9) et la buse extérieure (10) est reliée à l'élément de boîtier (2) de manière étanche aux fluides, en particulier soudée sur celui-ci.

9. Dispositif d'injection (50) selon l'une des revendications précédentes, dans lequel la soupape de sortie (57) est ajustée dans l'alésage axial (26).
